# EUROPEAN PATENT APPLICATION

(11) **EP 0 837 040 A1**
(43) Date of publication of application: **22.04.1998**
(21) Application number: 97117762.1
(22) Date of filing: 14.10.1997
(51) Int. Cl.: C03B 1/00, C03B 33/07, B27B 5/07, B24B 9/10, B24B 27/06

(54) **Method and machine for automatic cutting of laminated glass and armored glass**

(30) Priority: 17.10.1996 IT TV960130
(71) Applicant: FOR.EL. BASE di VIANELLO FORTUNATO & C. S.n.c., 31056 Vallio di Roncade (Treviso) (IT)
(72) Inventor: Vianello, Fortunato, 31056 Vallio di Roncade (TV) (IT); Moschini, Dino, 31050 San Cipriano (TV) (IT)

(57) **Abstract**

The present application has for object an automatic procedure for the cutting of the plates of laminated glass and armored glass (constituted by two or more plates of glass with intermediate membranes of plastic material, generally polyvinyl or polyvinylbutirrale), consisting mainly in the concept to perform: in a first phase the cut with abrasive grindstone of the plate according to a parallel line to a side of the plate (generally the small one), in a second phase the translation of the cut band, in a third phase the rotation of the same band, in a fourth phase the translation of the same band, in a fifth phase the cut of the band according to a line parallel to the other side of the original plate, or on the same station of which to the first phase or on an ulterior station and in ulterior progressive phases concerning both the bands and the plate to the completion of the splitting up of the plate. The procedure is performed on the plate in vertical position or, better, with a slightly slope in respect to the vertical plane but not excluding its application on the plate in horizontal position or with slope in respect to the horizontal position.

## Description

Nowadays it is known to effect the cutting of the plates of laminated glass through procedures and machines constituted by the so-called "horizontal cutting tables" working with tools to effect the cut in three phases: the incision of the plates, the breaking of the plates and the separation of the membrane, completely different cycle from that object of the present application that instead uses an unique tool constituted by a disk in abrasive material. No need to dwell therefore subsequently on this matter also for the fact that the procedure and the machine object of the present application are inserted more properly in the sector of the cutting of the plates of armored glass and the extension to the case of the laminated glass constitutes a possibility to be exploited considering that it is possible, while the vice-versa is not possible.

Nowadays it is known to effect the cutting of the plates of armored glass through procedures and machines constituted by the so-called "vertical cutting tables for armored glass" that introduces the following possibilities of working, however realized with a cutting tool constituted by a disk in abrasive material (grindstone) that acts on the plate of glass with vertical laying position or with slightly slope in respect to the vertical one:
Alternative A: execution of a vertical cut (level x) and removal of the cut strip or for its possible storing or for manual rotation of 90° of the same strip, repetition of one or more vertical cuts (level y) on the same strip, possible ulterior removals and rotations of 90° of the sub-strips for the repetition of ulterior cuts (levels z and following).
Alternative B: execution of cuts both vertical and horizontal on the plate obtainable through the orientation of the tool-holder head that can position the face of the grindstone or on the vertical plan or on the plain pseudo-horizontal (however orthogonal to the face of the plate of glass).

This first typology of described machine suffers, in both the alternatives, of a notable limit: its non automation (or the automation with considerable costs) and therefore the consequent necessity to effect the working with recourse to an imposing workmanship, that consists in the continuous manipulation of the glass respectively to change its orientation in such a way to effect the cuts of different level (y, z, etc.) in the case of the alternative A and in the charge to prepare, in concomitance of the working of the head and continually some wedges in way from to sustain the superior band of glass when a cut is effected with horizontal disposition in the case of the alternative B.

Procedure and machine for the cut of the laminated glass and armored glass are also known working through a hydraulic jet with elevated pressure in which the tool is constituted by the same jet of water containing abrasive particles that operates on the glass arranged horizontally. In respect to the preceding solution, besides the possibility to also have completely automatic versions, in this case the cut of shapes different from the rectangular one, particularly curve, is also allowed without limits of typologies, moreover communicating the information to the machine with computerized systems. The big limit results however determined by the impossibility to prepare, unless with prohibitive costs, machines having a so wide operative area to be able to work all the formats of raw material (glass sheets) existing in the market (maximum dimensions typical of the plates of laminated glass and armored glass: 6000 mm x 3210 mm).

Are besides known procedure and machine for the cut of the laminated glass and armored glass that use a metallic ribbon or rod without end with working abrasive covering in flow of water. Also in this case working of shapes different from the rectangular are allowed, particularly curved even if with ray not excessively small (in the case of ribbon system). Currently only manual versions of these machines exist, that besides are applicable to very contained dimensions of the plates.

Finally attempts of cutting with laser ray are known that, apart the insuperable problem due to the notable costs, have not had success.

Principal purpose that forms object of the present application is therefore that to resolve the underlined technical problems eliminating the inconveniences of which to the above listed known technique and therefore contriving a procedure that allows to obtain in automatic way the cut of a plate of laminated glass and armored glass, for the splitting up in sub-sections, generally rectangular but not excluding, even if with great complications, also the polygonal forms or at least with some oblique side.

The resolution of the aspects of automation of the procedure, of economy both of the machine and of the working carried out with the procedure and the machine object of the present application constitutes a revolution in the field of the cutting of the stratified glass and armored glass, as the actual known technique, also with the above listed limits due to the excessive required workmanship, is so diffused and accepted in its version with abrasive grindstone to constitute the universal method for excellence.

For better understanding the principle of the new procedure object of the present application, it is opportune to describe shortly the typologies and the characteristics of the product whose working of cut is performed according to the same procedure. The product is the so-called 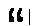 laminated glass" and 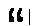 armored glass" constituted by two or more plates of single glass joined by means of one or more membranes of plastic product, the polyvinyl or polyvinylbutirrale, which joins in an irreversible way two or more plates of glass to constitute a "multi-layer" that acquires so elevated mechanical characteristics what the greatest moment of inertia and modulus of resistance to bending and insuperable characteristics of resistance to the breaking in as the brittleness of the glass, even if this brittleness remains the characteristic of the single plate, is compensated by the notable elastic resistance of the membrane or the membranes intimately interposed. Typically the single plates of glass, in the most diffused solutions, have a thickness from 6 to 52 mm, while the single membrane of polyvinyl is being obtained using one or more sheets with the purpose to also get elevated thicknesses.

The notable mechanical properties obtained make this glass usable with success in all the safety applications as: ANTI-SPAILS, ANTI-BREAKING, NOISE-INSULATION, ANTI-VANDALISM, ANTI-CRIME, ANTI-PROJECTILE etc., all applications that have an important increase of application.

The process of manufacture, that unites intimately and the plates and the membrane or the membranes, consists in the principal followings but not exclusive phases: washing and drying of the single plates, laying of the sheet or the sheets of polyvinylbutirrale in horizontal order on the inferior plate, laying of the superior plate, layout of ulterior sheets and plates, pressing of the whole group of plate / membrane / plate on horizontal heated roller press, final treatment in autoclave to elevated temperature.

This process is typically applied till the maximum dimensions of the laminated glass and armored glass of 6000 mm x 3210 mm, and the today's tendency is of to use the most possible this maximum format in how much logically the plate is great and great anymore is the optimization of the wastes coming from the following process of cut.

This tendency has also involved the exigency to study, to optimize and to carry out procedures of cut such to manage in automatic, ergonomic and economic way the so-called 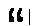 big plate" (6000 mm x 3210 mm), thing that is got rationally for the first time with the procedure object of the present patent application.

The assignment and the purposes above mentioned, as well as others that will appear subsequently more clearly, are reached by an automatic procedure for the cutting of the plates of glass and more particularly of the plates of laminated glass and armored glass, consisting essentially in the succession of the following phases carried into effect with position of the plates vertical or with light slope in comparison to the vertical plane:
CUTTING (performed vertically with working abrasive tool in flow of water) of the plate according to a parallel line to a side of the plate,
TRANSLATION of the cut band,
ROTATION of the same band,
following TRANSLATION of the same band,
CUTTING of the same band according to a parallel line to the other side of the original plate and in others
ULTERIOR PROGRESSIVE PHASES concerning both the bands and the plate till the completion of the splitting up of the plate.
The procedure is performed on the plate in vertical position or better with light slope in respect to the vertical plane but its application on the plate in horizontal position or however oriented is not excluded.

For better describing the procedure of cutting of the plate of laminated glass or armored glass, hereunder the figures relative to one of the possible configurations of machine carrying out the procedure object of the present application are commented, mentioning to possible alternative configurations that then will be better defined in the claims.

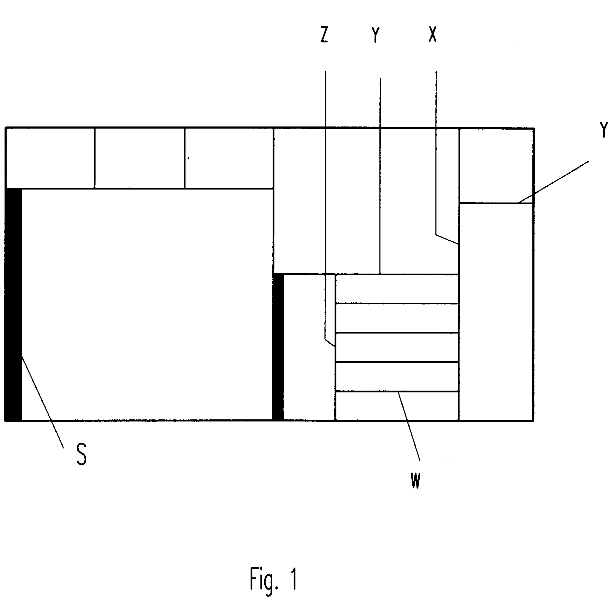

The Figure 1 shows the product that is processed with the procedure object of the present application that is the big plate of glass, with the sample tracing of the subdivision in the requested plates for the following employment. With x is pointed out the first level of cut, y the second, z the third etc., clearly the passage to the following level of cut involves the rotation of the strip of interested plate and its translation both from the zone of cut to that of rotation and the following from the zone of rotation to the preceding cutting bridge or to a following cutting bridge, in the case the machine has more than one cutting bridge. The same figure underlines as from the big plate are obtained, with the process of subdivision, both the plates destined to the final employment, and inevitably some strips constituent the wastes (indicated with S) as it 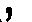 s logically impossible that the combination of the various formats of the ended pieces corresponds to the surface of the original plate.

Before continuing the description it is opportune to resume the nomenclature and the slang fluently used by the employees to the activity of cutting of the plates of glass, either to already use for practicality the common terms, either to eliminate by now possible misunderstandings due to the improper diffused terminology.
CUT: used term either for the global operation of splitting up of the big plate or the plate of glass in sub-section usable for the final employment, either for the execution of an only subdivision of a plate or part of plate in two pieces. In the specific case of the procedure and of the machine object of the present application, the term would result a little bit improper, nevertheless very diffused, as the operation is effected with an abrasive tool that saws the multi-layer plate.
CUTTING TABLE: machine or its only plain part in contact with the plate of glass where the operations of cutting are effected as intended in their more complete meaning.
FIXED BRIDGE: part of the machine, fixed respect the same one, constituted by a beam, with various possible structural conformations, where the operations of cut happen.
MOBILE BRIDGE: part of the machine, mobile on guides, with various possible structural conformations, where, in the case of the procedure and the machine object of the present application, the operations of translation and measurement of the multi-layer plate happen.

Continuing in the description of the procedure, phase by phase, through the comment of the figures representing, for convenience, a possible conformation of machine, it 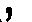 s specified that what constitutes the novelty and the inventive concept resides in having made possible the succession of all the operations for the splitting up of the plate in automatic way and without the intervention of the operator avoiding the manipulation of the strips, obtained with the preceding cut to get the following orthogonal, or however inclined in respect to the previous one, cuts. Enormous advantages are achieved both from the ergonomic point of view and safety and of occupation of space. It 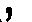 s enough that the operator removes from the station of exit of the machine the ended pieces as soon as they arrive, or the pieces can be stored in a following station of accumulation or storing.

The Figure 2 represents the big plate in position of load on the station of feeding of the cutting table.

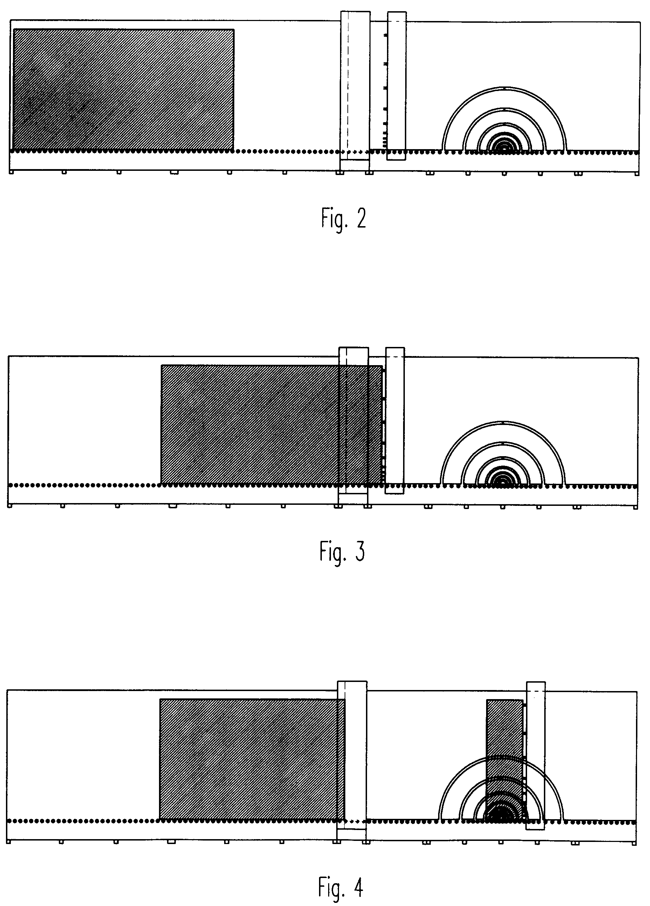

The Figure 3 represents the positioning of the big plate (that then it is repeated for the following portions of the same big plate) in such a way to bring the vertical line destined to be cut in correspondence of the station of cut. The desired quota is determined by the position of the mobile bridge, and of the relative reference of contrast with the glass; the mobile bridge also serves to the following clamping and translation of the strip if this last has such dimensions from not being transportable for the only action of the working conveyor operating in correspondence of the bottom edge of the same glass.

In this way a cut (in its specific meaning) of level x is obtained.

The Figure 4 represents the strip, previously cut, translated through the mobile bridge in correspondence of the station of rotation.

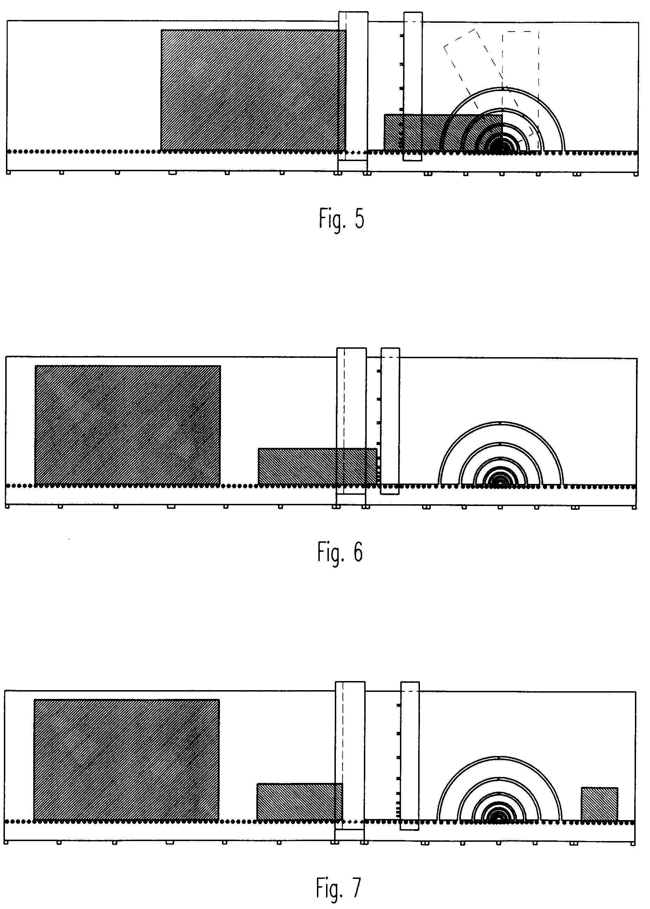

The Figure 5 represents the rotation of the same strip and the contemporary translation of the mobile bridge to the purpose of its anticipated positioning for the measurement of the dimension of following cut.

The Figure 6 represents the positioning of the strip (that then is repeated for the following portions of the same strip) in such a way to bring the vertical line destined to be cut in correspondence of the cutting station.

In this way a cut (in its specific meaning) of level y is obtained.

The Figure 7 represents the first ended piece (obtained through two levels of cut x and y) translated in the station of unloading of the machine and destined to the following process or to an intermediary station of accumulation / clearing or to a store.

It goes from oneself that the following cuts for the complete splitting up of the big plate or of the plate in sub-sections destined to the following uses, for example for the manufacture of the insulating glass, happen for repetition of the phases above described, eventually pushed also to the following levels of cut z, w, etc.

From the Process of storing of the big plate of glass (or of the generic plate) till the transfer to the working plants following the cutting, the glasses have never been manually handled as well no other manual activities have been necessary, this thanks to the rotation of the glass for the passage to the next level of cutting and to the use of the same cutting bridge, or of further one to obtain the cuts of following levels. This is the main inventive concept object of the present patent application. Non secondarily this is the first completely automatic procedure obtained with economic costs.

## Claims

1. automatic procedure for the cutting of the plates of laminated glass and armored glass carried out on glass laying with vertical position or with light slope in respect to the vertical or with any orientation, through one or more tools constituted by an abrasive disk working in flow of water, characterized by the fact that the process is articulated in a first phase of cutting of the plate according to a line parallel to a side of the plate, in a second phase of translation of the cut band, in a third phase of rotation of the same band, in a fourth phase of translation of the same band, in a fifth phase of cut of the band according to a line parallel to the other side of the original plate and in ulterior progressive phases concerning both the bands and the plate till the completion of the wanted splitting up of the plate in the progressive levels.

2. automatic device for the cutting of the plates of laminated glass and armored glass carried out on glass laying with vertical position or with light slope in respect to the vertical or with any orientation, through one or more tools constituted by an abrasive disk working in flow of water, characterized by the fact that the process is articulated in a first station of cutting of the plate according to a line parallel to a side of the plate, in a second station of translation of the cut band, in a third station of rotation of the same band, in a fourth station of translation of the same band, in a fifth station of cut of the band according to a line parallel to the other side of the original plate and in ulterior progressive repetitions of the working concerning both the bands and the plate till the completion of the wanted splitting up of the plate in the progressive levels.

3. procedure as to the preceding claims, characterized by the fact that the fifth phase (and the corresponding following) of cut orthogonal to that carried out in the first phase (and in the corresponding following) can happen or in correspondence of the same bridge of cut in which the cut of the first phase has happened or in correspondence of a separate bridge. According to the cases the sense of the translation of the fourth phase of translation changes.

4. procedure as to one or more than the preceding claims, characterized by the fact that the following levels of cut, besides being in condition of mutual orthogonality, can happen according to lines generically inclined for the obtaining of polygonal forms. In this case the relative machine foresees suitable mechanisms or for the inclination of the plate (or portion of plate) or for the inclination of the cutting bridge or the cutting bridges.

5. device as to one or more than the preceding claims, characterized by the fact that the fifth station (and the corresponding following) of cut orthogonal to that carried out in the first station (and in the corresponding following) can happen or in correspondence of the same first station containing the bridge of cut in which the cut of the first phase has happened or in another station distinguished by the first one. According to the cases the sense of the translation of the fourth phase of translation changes.

6. device as to one or more than the preceding claims, characterized by the fact that the following levels of cut, besides being in condition of mutual orthogonality, can happen according to lines generically inclined for the obtaining of polygonal forms. In this case the machine foresees suitable mechanisms or for the inclination of the plate (or portion of plate) or for the inclination of the cutting bridge or the cutting bridges.

7. device as to one or more than the preceding claims, characterized by the fact that the mobile bridge of translation and measurement is electrically driven with feed-back in such a way to transmit to the system of control information related to the position of the same to be able to effect the measurements of the glass.

8. device as to one or more than the preceding claims, characterized by the fact that the tool can be constituted both by a grindstone with abrasive mix and by a metallic disk with setting of abrasive material of quality and size suitable to the glass to be worked.

9. device as to one or more than the preceding claims, characterized by the fact that a calculator of process is interfaced that, besides the functions of process of the machine, carries out the functions of interface with the consumer, diagnostics and statistics.

10. procedure as to one or more than the preceding claims, characterized by the fact to use more separate fixed bridges for the cut related to the phases first, fifth, ninth,... and more separate zones for the rotation related to the phases third, seventh eleventh,... so that to improve the speed of the productive process.

11. device as to one or more than the preceding claims, characterized by the fact to use more separate fixed bridges for the cut, more separate mobile bridges for the translation and measurement of the plates of glass and more separate stations for the rotation of the plates of glass.
